# EUROPEAN PATENT APPLICATION

(11) **EP 4 657 207 A1**
(43) Date of publication of application: **03.12.2025**
(21) Application number: 24764095.6
(22) Date of filing: 31.01.2024
(51) Int. Cl.: G06F 3/01, G02B 27/01, G06T 19/00

(54) **ELECTRONIC DEVICE AND METHOD FOR PROVIDING FUNCTION RELATED TO EXTENDED REALITY**

(30) Priority: 02.03.2023 KR 20230028092; 08.05.2023 KR 20230059460; 21.07.2023 KR 20230095543
(71) Applicant: Samsung Electronics Co., Ltd., Suwon-si, Gyeonggi-do 16677 (KR)
(72) Inventor: HA, Yeongmin, Suwon-si Gyeonggi-do 16677 (KR); YANG, Doojin, Suwon-si Gyeonggi-do 16677 (KR); CHO, Yongil, Suwon-si Gyeonggi-do 16677 (KR); KIM, Sungoh, Suwon-si Gyeonggi-do 16677 (KR); KIM, Jooyoung, Suwon-si Gyeonggi-do 16677 (KR); YEOM, Donghyun, Suwon-si Gyeonggi-do 16677 (KR); WOO, Hyuntaek, Suwon-si Gyeonggi-do 16677 (KR); LEE, Jungjik, Suwon-si Gyeonggi-do 16677 (KR); CHOI, Sungsoo, Suwon-si Gyeonggi-do 16677 (KR)
(74) Representative: Gulde & Partner
(86) International application number: PCT/KR2024/001494
(87) International publication number: WO 2024/181695

(57) **Abstract**

According to an embodiment, a non-transitory computer-readable storage medium may store one or more programs. The one or more programs may include instructions which, when executed by a processor of an electronic device including a memory and at least one sensor, cause the electronic device to obtain data, which is obtained using the at least one sensor within a first time interval. The one or more programs may include instructions which, when executed by the processor of the electronic device, cause the electronic device to provide the data to at least one perception module among a plurality of perception modules.

## Description

### [Technical Field]

The following descriptions relate to an electronic device and a method for providing a function related to extended reality.

### [Background Art]

To provide an enhanced user experience, an electronic device is being developed that provides augmented reality (AR) and/or virtual reality (VR) services displaying computer-generated information in connection with an external object in the real world. The electronic device may be a wearable device that may be worn by a user. For example, the electronic device may be AR glasses and/or a head-mounted device (HMD).

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, a non-transitory computer readable storage medium may store one or more programs. The one or more programs may include instructions which, when executed by a processor of an electronic device with memory and at least one sensor, cause the electronic device to obtain, through a sensor management module, data obtained using the at least one sensor in a first time interval. The one or more programs may include instructions which, when executed by the processor, cause the electronic device to provide, to at least one perception module among a plurality of perception modules, the data through an interface configured for the plurality of perception modules. The one or more programs may include instructions which, when executed by the processor, cause the electronic device to store, through a service module, first gesture information of a user of the electronic device in the first time interval, obtained using the at least one perception module based on the data. The one or more programs may include instructions which, when executed by the processor, cause the electronic device to, after the first gesture information is stored, obtain second gesture information in a second time interval after the first time interval, based on a request for gesture information of the user received from an application for an extended reality (XR) service provided to the user. The one or more programs may include instructions which, when executed by the processor, cause the electronic device to provide the XR service through the application based on the first gesture information and the second gesture information.

According to an embodiment, a method of an electronic device may comprise obtaining, through a sensor management module, data obtained using at least one sensor in a first time interval. The method may comprise providing, to at least one perception module among a plurality of perception modules, the data through an interface configured for the plurality of perception modules. The method may comprise storing, through a service module, first gesture information of a user of the electronic device in the first time interval, obtained using the at least one perception module based on the data. The method may comprise obtaining, after the first gesture information is stored, second gesture information in a second time interval after the first time interval, based on a request for gesture information of the user received from an application for an extended reality (XR) service provided to the user. The method may comprise providing the XR service through the application based on the first gesture information and the second gesture information.

### [Description of the Drawings]

FIG. 1 is a block diagram of an electronic device in a network environment, according to an embodiment.
FIG. 2A shows an example of a prospective view of a wearable device, according to an embodiment.
FIG. 2B shows an example of one or more hardware disposed in a wearable device, according to an embodiment.
FIGS. 3A to 3B show an example of an exterior of a wearable device, according to an embodiment.
FIG. 4 shows an example of a block diagram of an electronic device, according to an embodiment.
FIG. 5 shows an example of a structure of a plurality of layers according to an embodiment.
FIG. 6 shows an example of a structure of a plurality of layers according to an embodiment.
FIGS. 7A and 7B show an example of an operation for information exchange between a plurality of perception modules according to an embodiment.
FIG. 8 shows an example of an operation of a service module according to an embodiment.
FIG. 9 shows a dataset for playback according to an embodiment.
FIG. 10 shows an example of an operation of a sensor management module according to an embodiment.
FIG. 11 shows a flowchart of an operation of an electronic device according to an embodiment.

### [Mode for Invention]

Hereinafter, an embodiment of the present disclosure is described in detail with reference to drawings so that those having ordinary knowledge in the art to which the present disclosure belongs, may easily implement the present disclosure. However, the present disclosure may be implemented in various different forms and is not limited to an embodiment described herein. Regarding a description of a figure, the same or similar reference numerals may be used for the same or similar components. In addition, in the drawings and related descriptions, descriptions for well-known functions and configurations may be omitted for clarity and conciseness.

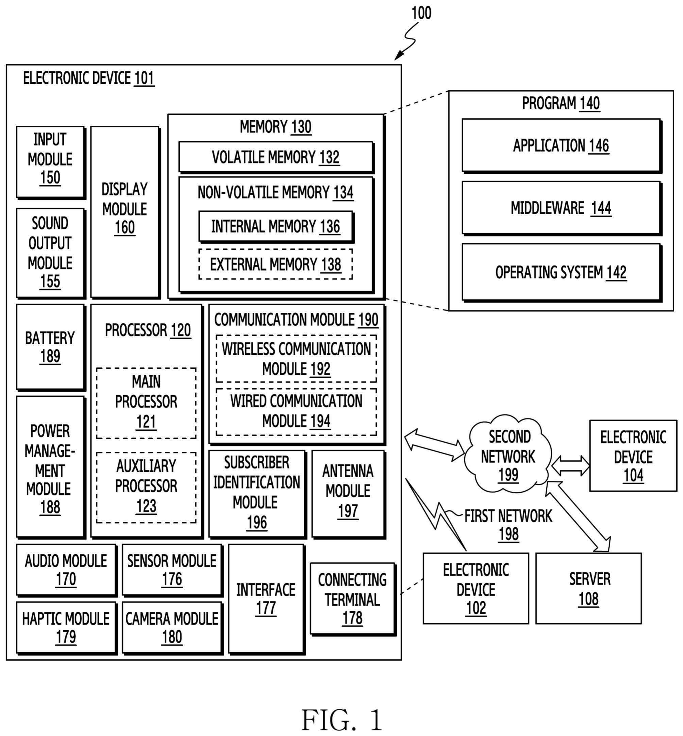

FIG. 1 is a block diagram of an electronic device in a network environment, according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.

The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

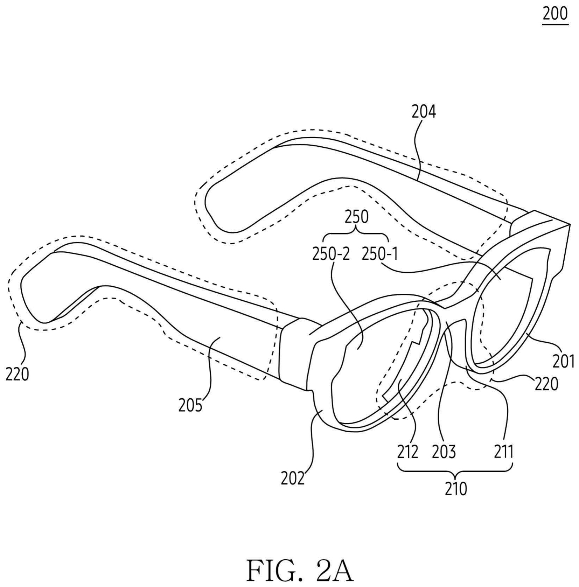

FIG. 2A shows an example of a prospective view of a wearable device, according to an embodiment.

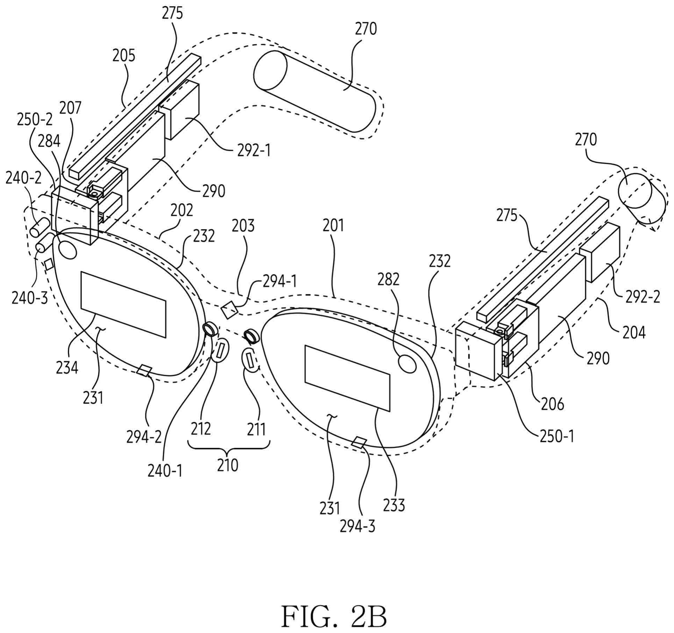

FIG. 2B shows an example of one or more hardware disposed in a wearable device, according to an embodiment.

A wearable device 200 shown in FIGS. 2A and 2B may be an example of the electronic device 101 of FIG. 1. As shown in FIG. 2A, according to an embodiment, the wearable device 200 may include at least one display 250 and a frame supporting the at least one display 250.

A ccording to an embodiment, the wearable device 200 may be wearable on a portion of the user's body. The wearable device 200 may provide augmented reality (AR), virtual reality (VR), or mixed reality (MR) combining the augmented reality and the virtual reality to a user wearing the wearable device 200. For example, the wearable device 200 may output a virtual reality image through at least one display 250, in response to a user's preset gesture obtained through a motion recognition camera 240-2 of FIG. 2B.

According to an embodiment, the at least one display 250 in the wearable device 200 may provide visual information to a user. The at least one display 250 may include the display 160 of FIG. 1. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may form a display area on the lens to provide a user wearing the wearable device 200 with visual information included in ambient light passing through the lens and other visual information distinct from the visual information. The lens may be formed based on at least one of a fresnel lens, a pancake lens, or a multi-channel lens. The display area formed by the at least one display 250 may be formed on the second surface 232 of the first surface 231 and the second surface 232 of the lens. When the user wears the wearable device 200, ambient light may be transmitted to the user by being incident on the first surface 231 and being penetrated through the second surface 232. For another example, the at least one display 250 may display a virtual reality image to be coupled with a reality screen transmitted through ambient light. The virtual reality image outputted from the at least one display 250 may be transmitted to eyes of the user, through one or more hardware (e.g., optical devices 282 and 284, and/or at least one waveguides 233 and 234) included in the wearable device 200.

According to an embodiment, the wearable device 200 may include waveguides 233 and 234 that transmit light transmitted from the at least one display 250 and relayed by the at least one optical device 282 and 284 by diffracting to the user. The waveguides 233 and 234 may be formed based on at least one of glass, plastic, or polymer. A nano pattern may be formed on at least a portion of the outside or inside of the waveguides 233 and 234. The nano pattern may be formed based on a grating structure having a polygonal or curved shape. Light incident to an end of the waveguides 233 and 234 may be propagated to another end of the waveguides 233 and 234 by the nano pattern. The waveguides 233 and 234 may include at least one of at least one diffraction element (e.g., a diffractive optical element (DOE), a holographic optical element (HOE)), and a reflection element (e.g., a reflection mirror). For example, the waveguides 233 and 234 may be disposed in the wearable device 200 to guide a screen displayed by the at least one display 250 to the user's eyes. For example, the screen may be transmitted to the user's eyes through total internal reflection (TIR) generated in the waveguides 233 and 234.

According to an embodiment, the wearable device 200 may analyze an object included in a real image collected through a photographing camera 240-1, combine with a virtual object corresponding to an object that become a subject of augmented reality provision among the analyzed object, and display on the at least one display 250. The virtual object may include at least one of text and images for various information associated with the object included in the real image. The wearable device 200 may analyze the object based on a multi-camera such as a stereo camera. For the object analysis, the wearable device 200 may execute time-of-flight (ToF) and/or simultaneous localization and mapping (SLAM) supported by the multi-camera. The user wearing the wearable device 200 may watch an image displayed on the at least one display 250.

According to an embodiment, a frame may be configured with a physical structure in which the wearable device 200 may be worn on the user's body. According to an embodiment, the frame may be configured so that when the user wears the wearable device 200, the first display 250-1 and the second display 250-2 may be positioned corresponding to the user's left and right eyes. The frame may support the at least one display 250. For example, the frame may support the first display 250-1 and the second display 250-2 to be positioned at positions corresponding to the user's left and right eyes.

Referring to FIG. 2A, according to an embodiment, the frame may include an area 220 at least partially in contact with the portion of the user's body in case that the user wears the wearable device 200. For example, the area 220 of the frame in contact with the portion of the user's body may include an area in contact with a portion of the user's nose, a portion of the user's ear, and a portion of the side of the user's face that the wearable device 200 contacts. According to an embodiment, the frame may include a nose pad 210 that is contacted on the portion of the user's body. When the wearable device 200 is worn by the user, the nose pad 210 may be contacted on the portion of the user's nose. The frame may include a first temple 204 and a second temple 205, which are contacted on another portion of the user's body that is distinct from the portion of the user's body.

According to an embodiment, the frame may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 200 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 200 may include hardware (e.g., hardware described above based on the block diagram of FIG. 1) that performs various functions. For example, the hardware may include a battery module 270, an antenna module 275, optical devices 282 and 284, speakers 292-1 and 292-2, microphones 294-1, 294-2, and 294-3, a depth sensor module (not illustrated), and/or a printed circuit board (PCB) 290. Various hardware may be disposed in the frame.

According to an embodiment, the microphones 294-1, 294-2, and 294-3 of the wearable device 200 may obtain a sound signal, by being disposed on at least a portion of the frame. The first microphone 294-1 disposed on the nose pad 210, the second microphone 294-2 disposed on the second rim 202, and the third microphone 294-3 disposed on the first rim 201 are illustrated in FIG. 2B, but the number and disposition of the microphone 294 are not limited to an embodiment of FIG. 2B. In a case that the number of the microphone 294 included in the wearable device 200 is two or more, the wearable device 200 may identify a direction of the sound signal by using a plurality of microphones disposed on different portions of the frame.

According to an embodiment, the optical devices 282 and 284 may transmit a virtual object transmitted from the at least one display 250 to the wave guides 233 and 234. For example, the optical devices 282 and 284 may be projectors. The optical devices 282 and 284 may be disposed adjacent to the at least one display 250 or may be included in the at least one display 250 as a portion of the at least one display 250. The first optical device 282 may correspond to the first display 250-1, and the second optical device 284 may correspond to the second display 250-2. The first optical device 282 may transmit light outputted from the first display 250-1 to the first waveguide 233, and the second optical device 284 may transmit light outputted from the second display 250-2 to the second waveguide 234.

In an embodiment, a camera 240 may include an eye tracking camera (ET CAM) 240-1, a motion recognition camera 240-2 and/or the photographing camera 240-3. The photographing camera 240-3, the eye tracking camera 240-1, and the motion recognition camera 240-2 may be disposed at different positions on the frame and may perform different functions. The photographing camera 240-3, the eye tracking camera 240-1, and the motion recognition camera 240-2 may be an example of the camera module 180 of FIG. 1. The eye tracking camera 240-1 may output data indicating a gaze of the user wearing the wearable device 200. For example, the wearable device 200 may detect the gaze from an image including the user's pupil, obtained through the eye tracking camera 240-1. An example in which the eye tracking camera 240-1 is disposed toward the user's right eye is illustrated in FIG. 2B, but the embodiment is not limited thereto, and the eye tracking camera 240-1 may be disposed alone toward the user's left eye or may be disposed toward two eyes.

In an embodiment, the photographing camera 240-3 may photograph a real image or background to be matched with a virtual image in order to implement the augmented reality or mixed reality content. The photographing camera may photograph an image of a specific object existing at a position viewed by the user and may provide the image to the at least one display 250. The at least one display 250 may display one image in which a virtual image provided through the optical devices 282 and 284 is overlapped with information on the real image or background including the image of the specific object obtained by using the photographing camera. In an embodiment, the photographing camera may be disposed on the bridge 203 disposed between the first rim 201 and the second rim 202.

In an embodiment, the eye tracking camera 240-1 may implement a more realistic augmented reality by matching the user's gaze with the visual information provided on the at least one display 250, by tracking the gaze of the user wearing the wearable device 200. For example, when the user looks at the front, the wearable device 200 may naturally display environment information associated with the user's front on the at least one display 250 at a position where the user is positioned. The eye tracking camera 240-1 may be configured to capture an image of the user's pupil in order to determine the user's gaze. For example, the eye tracking camera 240-1 may receive gaze detection light reflected from the user's pupil and may track the user's gaze based on the position and movement of the received gaze detection light. In an embodiment, the eye tracking camera 240-1 may be disposed at a position corresponding to the user's left and right eyes. For example, the eye tracking camera 240-1 may be disposed in the first rim 201 and/or the second rim 202 to face the direction in which the user wearing the wearable device 200 is positioned.

The motion recognition camera 240-2 may provide a specific event to the screen provided on the at least one display 250 by recognizing the movement of the whole or portion of the user's body, such as the user's torso, hand, or face. The motion recognition camera 240-2 may obtain a signal corresponding to motion by recognizing the user's gesture, and may provide a display corresponding to the signal to the at least one display 250. A processor may identify a signal corresponding to the operation and may perform a preset function based on the identification. In an embodiment, the motion recognition camera 240-2 may be disposed on the first rim 201 and/or the second rim 202.

In an embodiment, the camera 240 included in the wearable device 200 is not limited to the above-described eye tracking camera 240-1 and the motion recognition camera 240-2. For example, the wearable device 200 may identify an external object included in the FoV by using the photographing camera 240-3 disposed toward the user's FoV. The wearable device 200 identifying the external object may be performed based on a sensor for identifying a distance between the wearable device 200 and the external object, such as a depth sensor and/or a time of flight (ToF) sensor. The camera 240 disposed toward the FoV may support an autofocus function and/or an optical image stabilization (OIS) function. For example, in order to obtain an image including a face of the user wearing the wearable device 200, the wearable device 200 may include the camera 240 (e.g., a face tracking (FT) camera) disposed toward the face.

Although not illustrated, the wearable device 200 according to an embodiment may further include a light source (e.g., LED) that emits light toward a subject (e.g., user's eyes, face, and/or an external object in the FoV) photographed by using the camera 240. The light source may include an LED having an infrared wavelength. The light source may be disposed on at least one of the frame, and the hinge units 206 and 207.

According to an embodiment, the battery module 270 may supply power to electronic components of the wearable device 200. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

In an embodiment, the antenna module 275 may transmit the signal or power to the outside of the wearable device 200 or may receive the signal or power from the outside. The antenna module 275 may be electrically and/or operably connected to communication circuitry (e.g., the communication module 190 of FIG. 1) in the wearable device 200. In an embodiment, the antenna module 275 may be disposed in the first temple 204 and/or the second temple 205. For example, the antenna module 275 may be disposed close to one surface of the first temple 204 and/or the second temple 205.

In an embodiment, the speakers 292-1 and 292-2 may output a sound signal to the outside of the wearable device 200. A sound output module may be referred to as a speaker. In an embodiment, the speaker 292-1 and 292-2 may be disposed in the first temple 204 and/or the second temple 205 in order to be disposed adjacent to the ear of the user wearing the wearable device 200. For example, the wearable device 200 may include a second speaker 292-2 disposed adjacent to the user's left ear by being disposed in the first temple 204, and a first speaker 292-1 disposed adjacent to the user's right ear by being disposed in the second temple 205.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 200 to the user. For example, when the wearable device 200 requires charging, it may repeatedly emit red light at a designated time point. In an embodiment, the light emitting module may be disposed on the first rim 201 and/or the second rim 202.

Referring to FIG. 2B, according to an embodiment, the wearable device 200 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by the blocks described above with reference to FIG. 1) included in the wearable device 200 may be disposed. The wearable device 200 may include a flexible PCB (FPCB) for interconnecting the hardware.

According to an embodiment, the wearable device 200 may include at least one of a gyro sensor, a gravity sensor, and/or an acceleration sensor for detecting the posture of the wearable device 200 and/or the posture of a body part (e.g., a head) of the user wearing the wearable device 200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 200 may identify the user's motion and/or gesture performed to execute or stop a specific function of the wearable device 200 based on the IMU.

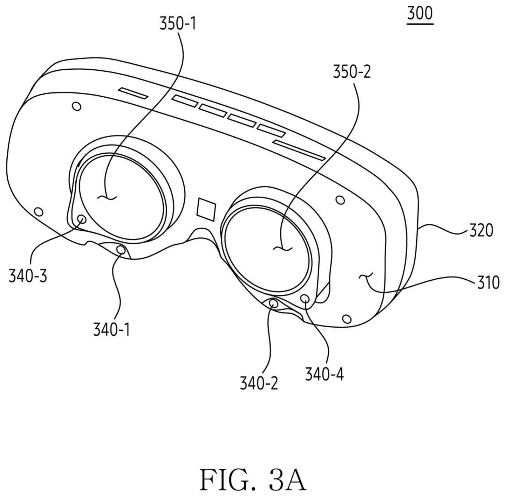

FIGS. 3A to 3B illustrate an example of an external appearance of a wearable device according to an embodiment. A wearable device 300 of FIGS. 3A to 3B may be an example of the electronic device 101 of FIG. 1 and the wearable device 200 of FIG.2A and 2B.

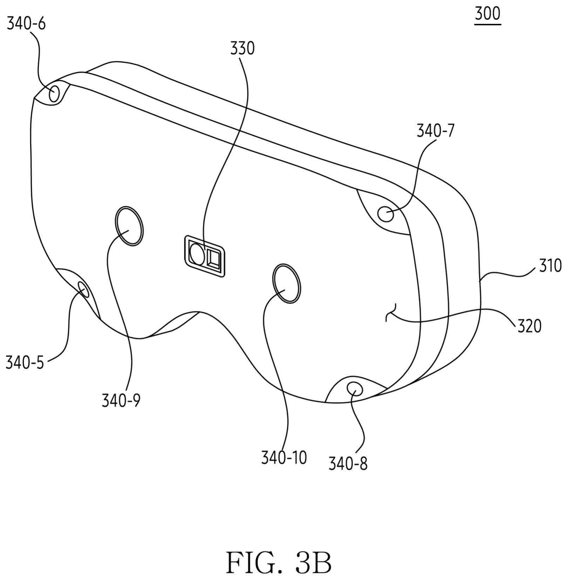

According to an embodiment, an example of an external appearance of a first surface 310 of a housing of the wearable device 300 may be illustrated in FIG. 3A, and an example of an external appearance of a second surface 320 opposite to the first surface 310 may be illustrated in FIG. 3B.

Referring to FIG. 3A, according to an embodiment, the first surface 310 of the wearable device 300 may have an attachable shape on the user's body part (e.g., the user's face). Although not illustrated, the wearable device 300 may further include a strap for being fixed on the user's body part, and/or one or more temples (e.g., the first temple 204 and/or the second temple 205 of FIGS. 2A to 2B). A first display 350-1 for outputting an image to the left eye among the user's two eyes and a second display 350-2 for outputting an image to the right eye among the user's two eyes may be disposed on the first surface 310. The wearable device 300 may further include rubber or silicon packing, which are formed on the first surface 310, for preventing interference by light (e.g., ambient light) different from the light emitted from the first display 350-1 and the second display 350-2.

According to an embodiment, the wearable device 300 may include cameras 340-3 and 340-4 for photographing and/or tracking two eyes of the user adjacent to each of the first display 350-1 and the second display 350-2. The cameras 340-3 and 340-4 may be referred to as an ET camera. According to an embodiment, the wearable device 300 may include cameras 340-1 and 340-2 for photographing and/or recognizing the user's face. The cameras 340-1 and 340-2 may be referred to as a FT camera.

Referring to FIG. 3B, a camera (e.g., cameras 340-5, 340-6, 340-7, 340-8, 340-9, and 340-10), and/or a sensor (e.g., the depth sensor 330) for obtaining information associated with the external environment of the wearable device 300 may be disposed on the second surface 320 opposite to the first surface 310 of FIG. 3A. For example, the cameras 340-5, 340-6, 340-7, 340-8, 340-9, and 340-10 may be disposed on the second surface 320 in order to recognize an external object distinct from the wearable device 300. For example, by using cameras 340-9 and 340-10, the wearable device 300 may obtain an image and/or media to be transmitted to each of the user's two eyes. The camera 340-9 may be disposed on the second surface 320 of the wearable device 300 to obtain a frame to be displayed through the second display 350-2 corresponding to the right eye among the two eyes. The camera 340-10 may be disposed on the second surface 320 of the wearable device 300 to obtain a frame to be displayed through the first display 350-1 corresponding to the left eye among the two eyes.

According to an embodiment, the wearable device 300 may include the depth sensor 330 disposed on the second surface 320 in order to identify a distance between the wearable device 300 and the external object. By using the depth sensor 330, the wearable device 300 may obtain spatial information (e.g., a depth map) about at least a portion of the FoV of the user wearing the wearable device 300.

Although not illustrated, a microphone for obtaining sound outputted from the external object may be disposed on the second surface 320 of the wearable device 300. The number of microphones may be one or more according to embodiments.

As described above, according to an embodiment, the wearable device 300 may have a form factor for being worn on a head of the user. The wearable device 300 may provide a user experience based on a VST mode and/or a VR mode in a state of being worn on the head. The wearable device 300 may identify at least one real light source in an external space including the wearable device 300, using the cameras 340-5, 340-6, 340-7, 340-8, 340-9, and 340-10. The wearable device 300 may perform rendering for a virtual space to be displayed through the first display 350-1 and/or the second display 350-2, using a virtual light source corresponding to the real light source. Based on the rendering, the wearable device 300 may provide a user experience such as the real light source perceived through the VST mode being moved to the VR mode.

According to an embodiment, an electronic device (e.g., the electronic device 101 of FIG. 1, the wearable device 200 of FIGS. 2A and 2B, or the wearable device 300 of FIGS. 3A and 3B) described below may be used to process data obtained using at least one sensor. The electronic device may operate based on a framework composed of a plurality of layers. For example, the plurality of layers may be used to identify (or obtain) gesture information of a user of the electronic device based on data obtained using at least one sensor. The identified gesture information may be used for a designated application (or an extended reality (XR) service). In the following specification, an electronic device operating based on a framework configured to perform the above-described operation may be described.

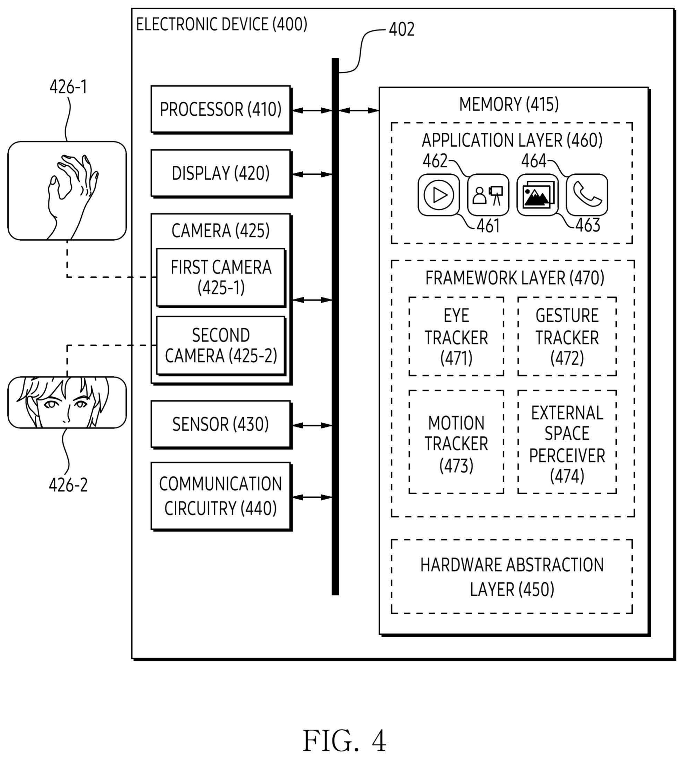

FIG. 4 shows an example of a block diagram of an electronic device, according to an embodiment. An electronic device 400 of FIG. 4 may be an example of the electronic device 101 of FIG. 1, the wearable device 200 of FIGS. 2A and 2B, and the wearable device 300 of FIGS. 3A and 3B.

According to an embodiment, the electronic device 400 may include at least one of a processor 410, memory 415, a display 420, a camera 425, a sensor 430, or communication circuitry 440. The processor 410, the memory 415, the display 420, the camera 425, the sensor 430, and the communication circuitry 440 may be electronically and/or operably coupled with each other by an electronical component such as a communication bus 402. Hereinafter, hardware being operably coupled may mean that a direct connection or an indirect connection between the hardware is established by wire or wirelessly, such that second hardware is controlled by first hardware among the hardware. Although shown based on different blocks, an embodiment is not limited thereto, and a part (e.g., at least a part of the processor 410, the memory 415, and the communication circuitry 440) of the hardware of FIG. 4 may be included in a single integrated circuit, such as a system on a chip (SoC). A type and/or the number of hardware included in the electronic device 400 are not limited to those shown in FIG. 4. For example, the electronic device 400 may include only a part of hardware components illustrated in FIG. 4.

In an embodiment, the processor 410 of the electronic device 400 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 410 may have a single-core processor structure, or may have a multi-core processor structure such as a dual core, a quad core, or a hexa core.

In an embodiment, the memory 415 of the electronic device 400 may include a hardware component for storing data and/or instructions inputted to and/or outputted from the processor 410 of the electronic device 400. The memory 415 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, or pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), or an embedded multi media card (eMMC).

In an embodiment, the display 420 of the electronic device 400 may output visualized information to a user of the electronic device 400. For example, the display 420 may output visualized information to the user by being controlled by the processor 410 including circuity such as a graphic processing unit (GPU). The display 420 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 425 of the electronic device 400 may include one or more optical sensors (e.g., a charged coupled device (CCD) sensor and a complementary metal oxide semiconductor (CMOS) sensor) that generate an electrical signal indicating color and/or brightness of light. A plurality of optical sensors included in the camera 425 may be disposed in a form of a 2 dimensional array. The camera 425 may generate 2 dimensional frame data corresponding to light that reached the optical sensors of the 2 dimensional array by obtaining electrical signals of each of the plurality of optical sensors substantially simultaneously. For example, photo data captured using the camera 425 may mean a 2 dimensional frame data obtained from the camera 425. For example, video data captured using the camera 425 may mean a sequence of a plurality of 2 dimensional frame data obtained from the camera 425 according to a frame rate. The camera 425 may further include a flash light disposed to face a direction in which the camera 425 receives light, and for outputting light in the direction.

According to an embodiment, the electronic device 400 may include, as an example of the camera 425, a first camera 425-1 and a second camera 425-2 disposed in different directions. The first camera 425-1 may be referred to as a motion perception camera, and the second camera 425-2 may be referred to as an eye tracking camera. The electronic device 400 may identify a position, a shape, and/or a gesture of a hand using an image 426-1 of the first camera 425-1. The electronic device 400 may identify a direction of gaze of a user wearing the electronic device 400 using an image 426-2 of the second camera 425-2.

According to an embodiment, the sensor 430 of the electronic device 400 may generate electronic information that may be processed by the processor 410 and/or the memory 415 of the electronic device 400 from non-electronic information related to the electronic device 400. The information may be referred to as sensor data. The sensor 430 may include a global positioning system (GPS) sensor for detecting a geographic location of the electronic device 400, an image sensor, an illumination sensor and/or a time-of-flight (ToF) sensor, and an inertial measurement unit (IMU) for detecting a physical motion of the electronic device 400.

In an embodiment, the communication circuitry 440 of the electronic device 400 may include a hardware component for supporting transmission and/or reception of an electrical signal between the electronic device 400 and an external electronic device (e.g., a remote controller for controlling the electronic device 400). The communication circuitry 440 may include, for example, at least one of a modem, an antenna, or an optic/electronic (O/E) converter. The communication circuitry 440 may support transmission and/or reception of an electrical signal based on various types of protocols, such as Ethernet, local area network (LAN), wide area network (WAN), wireless fidelity (WiFi), Bluetooth, Bluetooth low energy (BLE), ZigBee, long term evolution (LTE), 5G new radio (NR), and/or 6G.

Although not shown, according to an embodiment, the electronic device 400 may include an output means for outputting information in a form other than a visualized form. For example, the electronic device 400 may include a speaker for outputting an acoustic signal. For example, the electronic device 400 may include a motor for providing haptic feedback based on vibration.

According to an embodiment, in the memory 415 of the electronic device 400, one or more instructions (or commands) indicating a computation and/or an operation to be performed by the processor 410 of the electronic device 400 on data may be stored. A set of one or more instructions may be referred to as a program, firmware, an operating system, a process, a routine, a sub-routine, and/or an application. Hereinafter, an application being installed in an electronic device (e.g., the electronic device 400) may mean that one or more instructions provided in a form of an application are stored in the memory 415, and that the one or more applications are stored in a format (e.g., a file having an extension designated by an operating system of the electronic device 400) executable by a processor of the electronic device. According to an embodiment, the electronic device 400 may perform operations of the electronic device 400 described below by executing one or more instructions stored in the memory 415.

According to an embodiment, programs installed in the electronic device 400 may be classified into any one layer of different layers including an application layer 460, a framework layer 470, and/or a hardware abstraction layer (HAL) 450, based on a target. For example, although FIG. 4 shows the layers as being distinguished in the memory 415, the layers may be logically distinguished. However, it is not limited thereto. According to an embodiment, the layers may be stored in a designated area in the memory 415.

For example, programs (e.g., a driver) designed to target hardware (e.g., the display 420, the camera 425, the sensor 430, and/or the communication circuitry 440) of the electronic device 400 may be classified in the hardware abstraction layer 450. For example, programs (e.g., an eye tracker 471, a gesture tracker 472, a motion tracker 473, and/or an external space perceiver 474) designed to target at least one of the hardware abstraction layer 450 and/or the application layer 460 may be classified in the framework layer 470. The programs classified as the framework layer 470 may provide an application programming interface (API) executable based on another program.

According to an embodiment, a program designed to target a user controlling the electronic device 400 may be classified in the application layer 460. For example, a program classified as the application layer 460 may include at least one of an application 461 for playing and/or streaming a video, an application 462 for video conferencing, an application 463 for viewing media content (e.g., an image and/or a video) of the memory 415, or an application 464 for call connection. An embodiment is not limited thereto. For example, a program classified as the application layer 460 may cause execution of a function supported by programs classified as the framework layer 470 by calling an API.

For example, the electronic device 400 may process information related to gaze of a user wearing the electronic device 400, based on execution of the eye tracker 471 in the framework layer 470. For example, the electronic device 400 may obtain the image 426-2 including an eye of the user from the second camera 425-2. Based on a position and/or a direction of a pupil included in the image 426-2, the electronic device 400 may identify a direction of the gaze of the user.

For example, the electronic device 400 may identify a motion of a designated body part including a hand based on execution of the gesture tracker 472 in the framework layer 470. For example, the electronic device 400 may obtain the image 426-1 and/or a video including the body part from the first camera 425-1. Based on a motion and/or a posture of the designated body part indicated by the image 426-1 and/or the video, the electronic device 400 may identify a gesture performed by the designated body part. For example, from the image 426-1, based on identifying a first finger (e.g., a thumb) and one or more second fingers contacted at a fingertip based on a form of a closed curve, the electronic device 400 may determine that a pinch gesture has been performed by the hand.

For example, the electronic device 400 may identify a motion of the electronic device 400 based on execution of the motion tracker 473 in the framework layer 470. In a state in which the electronic device 400 is worn by the user, the motion of the electronic device 400 may be related to a motion of a head of the user. For example, the electronic device 400 may identify a direction of the electronic device 400 substantially matching a direction of the head. The electronic device 400 may identify the motion of the electronic device 400 based on sensor data of the sensor 430 including the IMU.

For example, the electronic device 400 may include information on an external space including the electronic device 400 or adjacent to the electronic device 400, based on execution of the external space perceiver 474 in the framework layer 470. The electronic device 400 may obtain the information using the camera 425 and/or the sensor 430. As an example, in a state in which the external space perceiver 474 is executed, the electronic device 400 may identify a virtual space mapped to the external space, based on the information obtained based on the external space perceiver 474. Based on the execution of the external space perceiver 474, the electronic device 400 may identify a position and/or a direction of the electronic device 400 in the external space. For example, based on the execution of the external space perceiver 474 and/or the motion tracker 473, the electronic device 400 may perform simultaneous localization and mapping (SLAM) for perceiving the external space and perceiving the position of the electronic device 400 in the external space.

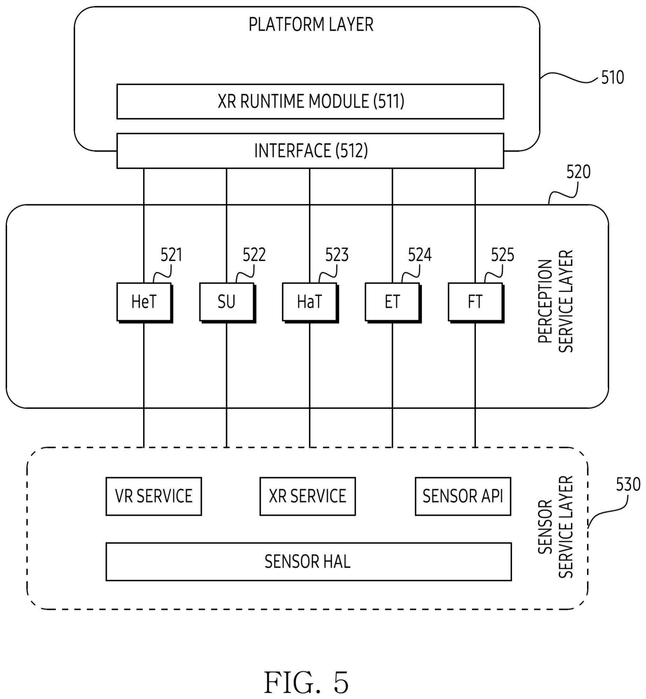

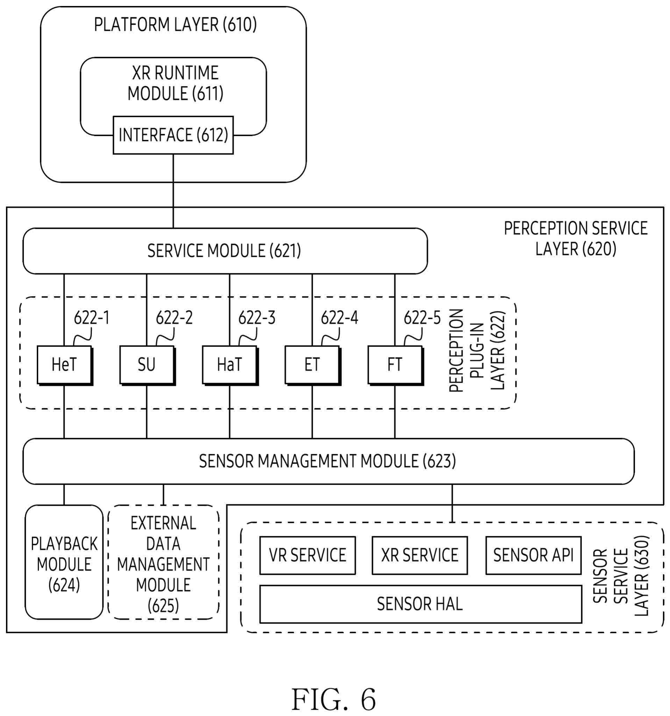

A specific example of a layer structure for an XR service including the application layer 460, the hardware abstraction layer 450, and the framework layer 460, as described above, will be described in FIGS. 5 and 6. Layers for the XR service may operate by the processor 410 of the electronic device 400. Hereinafter, for convenience of description, modules (or components) included in the layers for the XR service will be described as performing an operation. Elements (e.g., layers and/or modules) in the memory described below may be in a logically distinguished state. However, it is not limited thereto.

FIG. 5 shows an example of a structure of a plurality of layers according to an embodiment.

Referring to FIG. 5, programs installed in an electronic device 400 may be classified into one layer among a platform layer 510, a perception service layer 520, and a sensor service layer 530. For example, the electronic device 400 may operate based on the platform layer 510, the perception service layer 520, and the sensor service layer 530.

According to an embodiment, the platform layer 510 may be configured for an XR service. For example, the platform layer 510 may include a platform (e.g., an Android platform) for supporting the XR service.

For example, the platform layer 510 may include an XR runtime module 511. As an example, the XR runtime module 511 may be referred to as an OpenXR runtime module. The XR runtime module 511 may be used to provide, through the electronic device 400, at least one of a user pose prediction function, a frame timing function, and/or a spatial input function. As an example, the XR runtime module 511 may be used to perform rendering for the XR service to the user. For example, an application (e.g., unity or OpenXR native application) may be implemented based on the XR runtime module 511.

For example, an interface 512 may be used for data exchange between the platform layer 510 and the perception service layer 520. As an example, the interface 512 may be referred to as OpenPX. The interface 512 may be used for a perception client and a perception service.

According to an embodiment, the perception service layer 520 may include a plurality of perception modules. The plurality of perception modules may include at least one of a head tracking (HeT) module 521, a scene understanding (SU) module 522, a hand tracking (HaT) module 523, an eye tracking (ET) module 524, and a face tracking (FT) module 525.

For example, the head tracking module 521 may identify a posture of the electronic device 400 using at least one sensor of the electronic device 400. As an example, the head tracking module 521 may identify a 6 degrees of freedom pose (6 dof pose) of the electronic device 400 based on data obtained using a camera (e.g., the camera 425 of FIG. 4) and an IMU.

For example, the scene understanding module 522 may be used for configuring a surrounding environment of the electronic device 400 (or a user of the electronic device 400) into a 3 dimensional virtual space. The scene understanding module 522 may be used to reconstruct the surrounding environment of the electronic device 400 in 3 dimensions based on data obtained using a camera (e.g., the camera 425 of FIG. 4). The scene understanding module 522 may identify at least one of a flat surface, a slope, or a step based on the surrounding environment of the electronic device 400 reconstructed in 3-dimensions.

For example, the hand tracking module 523 may be used for identifying (or perceiving) a pose and/or a gesture of a hand of a user of the electronic device 400. As an example, the hand tracking module 523 may identify a pose and/or a gesture of the hand of the user based on data obtained from at least one sensor. As an example, the hand tracking module 523 may identify a pose and/or a gesture of the hand of the user based on data (e.g., an image) obtained using a camera.

For example, the eye tracking module 524 may be used for identifying (or tracking) movement of an eye of the user of the electronic device 400. As an example, the eye tracking module 524 may identify the movement of the eye of the user based on data obtained from at least one sensor. As an example, the eye tracking module 524 may identify the movement of the eye of the user based on data obtained using a camera (e.g., the eye tracking camera 240-1 of FIGS. 2A and 2B) and/or an infrared light emitting diode (IR LED).

For example, the face tracking module 525 may be used for identifying (or tracking) movement of a face of a user or a facial expression of the user. The face tracking module 525 may estimate the facial expression of the user based on the movement of the face of the user. As an example, the face tracking module 525 may identify the movement of the face of the user and/or the facial expression of the user based on data (e.g., an image) obtained using a camera (e.g., the camera 240 of FIGS. 2A and 2B).

According to an embodiment, the sensor service layer 530 may be used to control at least one sensor (e.g., a camera, an IMU, and a time of flight (ToF) sensor). For example, the sensor service layer 530 may be used to provide a service for access to at least one sensor. For example, the sensor service layer 530 may include at least one of a module for a VR service (e.g., QVRservice), a module for an XR service (e.g., SxrSensorService), a sensor API (e.g., android sensor API), or a sensor hardware abstraction layer (sensor HAL).

FIG. 6 shows an example of a structure of a plurality of layers according to an embodiment.

Referring to FIG. 6, programs installed in an electronic device 400 may be classified into one of a platform layer 610, a perception service layer 620, and a sensor service layer 630. For example, the electronic device 400 may operate based on the platform layer 610, the perception service layer 620, and the sensor service layer 630.

According to an embodiment, the platform layer 610 may be configured for an XR service. The platform layer 610 may correspond to the platform layer 510 of FIG. 5.

According to an embodiment, the perception service layer 620 may include a service module 621, a perception plug-in layer 622, a sensor management module 623, a playback module 624, and/or an external data management module 625. For example, the perception service layer 620 may include at least one of the service module 621, the perception plug-in layer 622, the sensor management module 623, the playback module 624, and/or the external data management module 625. For example, at least a part of the service module 621, the perception plug-in layer 622, the sensor management module 623, the playback module 624, and the external data management module 625 may be omitted.

For example, the service module 621 may be used to manage data (e.g., gesture information) obtained from a plurality of perception modules included in the perception plug-in layer 622. As an example, the service module 621 may be referred to as SxrDataService.

For example, the service module 621 may perform interfacing with an upper layer (e.g., the platform layer 610 or the XR runtime module 611). The service module 621 may exchange data with the upper layer (e.g., the platform layer 610 or the XR runtime module 611) through an interface 612. As an example, the interface 612 may be referred to as OpenPX. According to an embodiment, the service module 621 may support OpenXR Extension as well as OpenPX.

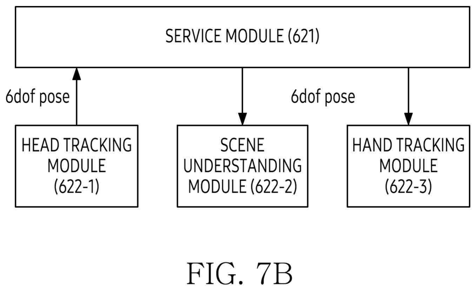

For example, the service module 621 may be used to exchange data (e.g., gesture information) between the plurality of perception modules. A specific embodiment in which the data between the plurality of perception modules is exchanged through the service module 621 will be described below with reference to FIG. 7B.

For example, the perception plug-in layer 622 may include a plurality of perception modules. The plurality of perception modules may be referred to as a plurality of perception solutions.

As an example, the plurality of perception modules may include at least one of a head tracking (HeT) module 622-1, a scene understanding (SU) module 622-2, a hand tracking (HaT) module 622-3, an eye tracking (ET) module 622-4, and a face tracking (FT) module 622-5. Each of the plurality of perception modules included in the perception plug-in layer 622 may include a common interface for connection (or link) with the sensor management module 623. Since each of the plurality of perception modules includes the common interface for connection (or link) with the sensor management module 623, the plurality of perception modules of FIG. 6 may be distinguished from the plurality of perception modules of FIG. 5.

As an example, the plurality of perception modules included in the perception plug-in layer 622 may be configured in a plug-in structure. As an example, a part of the plurality of perception modules may be replaced with another module, regardless of the sensor service layer 630, which is a lower layer of the perception service layer 620, and the platform layer 610.

According to an embodiment, the sensor management module 623 may be used to provide (or transmit) data to each of the plurality of perception modules through the common interface. For example, the sensor management module 623 may be used to separate (or remove) dependency between the sensor service layer 630, which is a lower layer, and the perception plug-in layer 622, which is an upper layer. For example, the sensor management module 623 may be referred to as SxrSensorSeviceManger.

For example, the sensor management module 623 may support various modules (or sensor services) of the sensor service layer 630. The plurality of perception modules may not directly interface with the sensor service layer 630. The plurality of perception modules may receive data (e.g., sensor data) through the sensor management module 623. Accordingly, even when a module of the sensor service layer 630 is changed, the plurality of perception modules may not be affected.

For example, the sensor management module 623 may further include a load balancing module. The load balancing module may identify data provided from the sensor service layer 630. The load balancing module may identify at least part of perception modules among the plurality of perception modules based on the data provided from the sensor service layer 630. The load balancing module may provide data to the identified at least part of perception modules. As an example, the load balancing module may distribute data to the plurality of perception modules based on a state of the plurality of perception modules and/or a state of the electronic device 400. As an example, the load balancing module may filter the data provided to the plurality of perception modules based on the state of the plurality of perception modules and/or the state of the electronic device 400. According to an embodiment, the load balancing module may be configured independently of the sensor management module 623. The load balancing module may be referred to as a SxrPerceptionLoadBalancer.

For example, the playback module 624 may be used to provide a stored dataset to at least one of the plurality of perception modules in real time through playback. As an example, the dataset may be stored through the playback module 624 based on a designated specification. The dataset may include not only first data obtained from the sensor service layer 630 but also second data (e.g., virtual object data or synthetic data) obtained based on the first data obtained from the service layer 630. As an example, the first data may be referred to as sensor data. The second data may be referred to as virtual data.

According to an embodiment, the electronic device 400 may receive data from an external electronic device. For example, the data received from the external electronic device may include first data obtained from a service layer included in the external electronic device and/or second data obtained based on the first data. The electronic device 400 may perform playback (or a playback function) using the data received from the external electronic device. The electronic device 400 may transmit a result of performing the playback (or the playback function) to the external electronic device. For example, the electronic device 400 may be used for processing data obtained in the external electronic device instead. The electronic device 400 may receive data obtained from at least one sensor of the external electronic device. The electronic device 400 may obtain information (e.g., information on a 6 degrees of freedom pose) obtained through the playback module 624 (or the plurality of perception modules) based on the received data. The electronic device 400 may transmit the obtained information to the external electronic device. The external electronic device may provide an XR service based on the obtained information.

The playback module 624 may perform playback (or a playback function) based on at least one of the first data and the second data. According to an embodiment, the playback module 624 may perform playback by combining (or mixing) real-time data (e.g., runtime data) and prestored data.

As an example, playback may mean a function of using stored data (or gesture information) according to an operation of the electronic device 400. As an example, playback may mean a function of identifying a value for performance of an XR service through a comparison between gesture information obtained based on a designated operation related to the XR service and reference gesture information according to the designated operation.

As an example, playback may mean a function of obtaining performance information of an XR service provided to a user of the electronic device 400. The playback module 624 may identify information (e.g., gesture information) on a user who has performed a designated operation (e.g., a mission) related to the XR service. The playback module 624 may identify reference information related to the designated operation. The reference information may mean information for determining completion of the performance of the designated operation. The playback module 624 may identify a similarity between the information on the user who has performed the designated operation and the reference information. The playback module 624 may identify whether the performance of the designated operation by the user has been completed based on the similarity.

According to an embodiment, the playback module 624 may be included in the sensor management module 623. For example, the playback module 624 may perform playback through the sensor management module 623 without changing the plurality of perception modules.

For example, the external data management module 625 may be used to manage data obtained through an external electronic device (e.g., a smart watch, a smart phone, or a tablet PC) (or at least one sensor of the external electronic device) connected to the electronic device 400. As an example, the external data management module 625 may improve accuracy of the plurality of perception modules by using the data obtained from the external electronic device. As an example, the external data management module 625 may correct data (or gesture information) obtained from the plurality of perception modules by using the data obtained from the external electronic device. According to an embodiment, the external data management module 625 may not be included in the perception service layer 620.

For example, the sensor service layer 630 may correspond to the sensor service layer 530 of FIG. 5.

According to an embodiment, the sensor management module 623 may provide sensor data to the perception plug-in layer 622 through a common interface. For example, the sensor management module 623 may provide sensor data to each of the plurality of perception modules through the same interface. For example, the sensor management module 623 may provide sensor data, according to an operation of a perception module, to the perception module without changing configuration information of the perception plug-in layer 622, based on changing (or modifying) configuration information (e.g., a configuration file) related to the sensor management module 623.

For example, the sensor management module 623 may identify sensor data for at least one perception module based on an operation of the at least one perception module among the plurality of perception modules. The sensor management module 623 may provide the identified sensor data to the at least one perception module.

As an example, when the head tracking module 622-1 is driven, the sensor management module 623 may obtain camera data and IMU data in the sensor service layer 630, through at least one of a module for a VR service, a module for an XR service, a sensor API, or a sensor hardware abstraction layer. The sensor management module 623 may provide the camera data and the IMU data to the head tracking module 622-1. According to an embodiment, the camera data and the IMU data may be obtained through different modules.

As an example, when the scene understanding module 622-2 is driven in a playback mode, the sensor management module 623 may identify stored camera data and stored posture data. The sensor management module 623 may provide the camera data and the posture data to the scene understanding module 622-2.

According to an embodiment, the service module 621 may be configured to remove dependency on an upper layer of the perception plug-in layer 622. For example, the upper layer of the perception plug-in layer 622 may include the platform layer 610 (e.g., android XR) and/or an application layer (e.g., the application layer 460 of FIG. 4).

For example, the service module 621 may be configured to integrate and manage information (e.g., gesture information or tracking data) obtained from the plurality of perception modules.

For example, the service module 621 may convert information (e.g., gesture information or tracking data) according to a requirement of an upper layer without changing the plurality of perception modules, and then provide the converted information to the upper layer.

As an example, the service module 621 may obtain information on a 6 degrees of freedom pose from the head tracking module 622-1. The information on the 6 degrees of freedom pose obtained from the head tracking module 622-1 may be configured in a quaternion format. Conversely, an upper layer (e.g., the platform layer 610) may request information on a 6 degrees of freedom pose configured in an axis-angle representation format. The service module 621 may change (or convert) the information on the 6 degrees of freedom pose configured in the quaternion format into the information on the 6 degrees of freedom pose configured in the axis-angle representation format. The service module 621 may provide the information on the 6 degrees of freedom pose configured in the axis-angle representation format to the upper layer (e.g., the platform layer 610). However, it is not limited thereto. For example, the service module 621 may change (or convert) the information on the 6 degrees of freedom pose configured in the axis-angle representation format into the information on the 6 degrees of freedom pose configured in the quaternion format, and provide it to the upper layer.

As an example, the service module 621 may obtain information on movement of a hand from the hand tracking module 622-3. The information on the movement of the hand may be obtained based on movement of a first number of joints. Conversely, an upper layer (e.g., the platform layer 610) may request the information on the movement of the hand obtained based on movement of a second number of joints. The service module 621 may perform one of a joint interpolation procedure or a simplification procedure. The service module 621 may support a joint structure required by the upper layer based on performing one of the joint interpolation procedure and the simplification procedure.

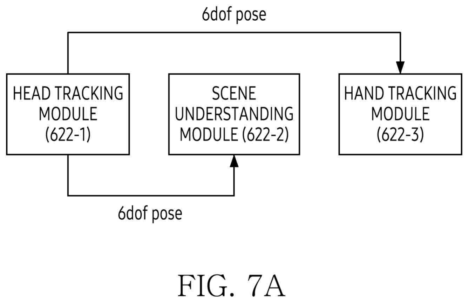

FIGS. 7A and 7B show an example of an operation for information exchange between a plurality of perception modules according to an embodiment.

Referring to FIG. 7A, an operation between the perception modules shown in FIG. 7A may be performed in the structure of FIG. 5.

A first perception module (e.g., a scene understanding module 622-2) among the plurality of perception modules may directly request information obtained from a second perception module (e.g., a head tracking module 622-1) among the plurality of perception modules and may directly receive the information from the second perception module. For example, for the first perception module to directly request and receive information from the second perception module, data synchronization may be in a state of having been performed. For example, each of the plurality of perception modules may include a buffer. A process for an information exchange process between the plurality of perception modules may be defined according to a size of a buffer or a type of storage data.

For example, the head tracking module 622-1, the scene understanding module 622-2, and the hand tracking module 622-3 may exchange information. For example, information obtained from the head tracking module 622-1 may be provided to at least one of the scene understanding module 622-2 or the hand tracking module 622-3. For example, information obtained from the scene understanding module 622-2 may be provided to the head tracking module 622-1 and the hand tracking module 622-3. In FIG. 7A, an operation for information exchange between the head tracking module 622-1, the scene understanding module 622-2, and the hand tracking module 622-3 is described, but is not limited thereto. The plurality of perception modules of FIG. 6 may perform the same or similar operation.

For example, the head tracking module 622-1 may obtain information on a 6 degrees of freedom pose. As an example, the scene understanding module 622-2 may request the information on the 6 degrees of freedom pose from the head tracking module 622-1. The head tracking module 622-1 may provide the information on the 6 degrees of freedom pose to the scene understanding module 622-2 in response to the request. As an example, the hand tracking module 622-3 may request the information on the 6 degrees of freedom pose from the head tracking module 622-1. The head tracking module 622-1 may provide the information on the 6 degrees of freedom pose to the hand tracking module 622-3 in response to the request.

Referring to FIG. 7B, an operation between the perception modules shown in FIG. 7B may be performed in the structure of FIG. 6.

The service module 621 may be used to manage information obtained from the plurality of perception modules. For example, the service module 621 may store the information obtained from the plurality of perception modules. The service module 621 may receive a request for information obtained through the second perception module from the first perception module among the plurality of perception modules. The service module 621 may provide the information obtained through the second perception module to the first perception module.

According to an embodiment, the service module 621 may perform at least one of synchronization, buffering, or searching of information obtained from each of the plurality of perception modules.

According to an embodiment, based on storing information obtained from the plurality of perception modules, the service module 621 may immediately provide the information to an upper layer (e.g., the platform layer 610) according to a request received from the upper layer.

For example, the service module 621 may obtain the information on the 6 degrees of freedom pose from the head tracking module 622-1. The service module 621 may store the information on the 6 degrees of freedom pose. The service module 621 may receive a request for the information on the 6 degrees of freedom pose from the scene understanding module 622-2 and the hand tracking module 622-3. The service module 621 may provide the previously stored information on the 6 degrees of freedom pose to the scene understanding module 622-2 and the hand tracking module 622-3 based on the request.

In the above-described embodiment, an operation in which the service module 621 previously stores the information obtained from the plurality of perception modules has been described, but is not limited thereto. The service module 621 may receive a request for the information obtained through the second perception module from the first perception module in real time. The service module 621 may request information from the second perception module based on the request. The service module may provide the information received from the second perception module to the first perception module.

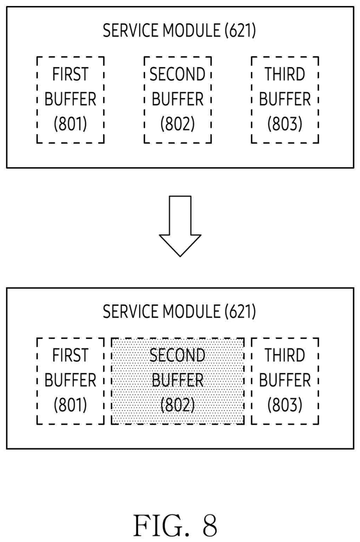

FIG. 8 shows an example of an operation of a service module according to an embodiment.

Referring to FIG. 8, a service module 621 may include a plurality of buffers respectively corresponding to a plurality of perception modules. The service module 621 may independently change a size of each of the plurality of buffers. The service module 621 may dynamically change the size of each of the plurality of buffers.

For example, the service module 621 may include a first buffer 801, a second buffer 802, and a third buffer 803. As an example, the service module 621 including the first buffer 801, the second buffer 802, and the third buffer 803 may mean that the first buffer 801, the second buffer 802, and the third buffer 803 may be configured in at least a part of memory 415, and that the first buffer 801, the second buffer 802, and the third buffer 803 may be used by the service module 621. As an example, the service module 621 including the first buffer 801, the second buffer 802, and the third buffer 803 may mean that the service module 621 including the first buffer 801, the second buffer 802, and the third buffer 803 may be configured in at least a part of the memory 415.

As an example, the first buffer 801 may be used to store information obtained from a head tracking module 622-1. The first buffer 801 may be used to store information on a posture (e.g., a 6 degrees of freedom pose) of a second electronic device 220.

As an example, the second buffer 802 may be used to store information obtained from a scene understanding module 622-2. The second buffer 802 may be used to store information on a surrounding space (e.g., scene mesh information) reconstructed in 3-dimentions according to a space in which an electronic device 400 is located.

As an example, the third buffer 803 may be used to store information obtained from a hand tracking module 622-3. The third buffer 803 may be used to store information on movement of a hand of a user.

For example, basically, sizes of the first buffer 801, the second buffer 802, and the third buffer 803 may all be configured to be substantially the same. A processor 410 may dynamically change the sizes of the first buffer 801, the second buffer 802, and the third buffer 803.

As an example, when a long term search function is required, the service module 621 may dynamically change the sizes of the first buffer 801, the second buffer 802, and the third buffer 803. The service module 621 may change a size of a buffer (e.g., the first buffer 801, the second buffer 802, or the third buffer 803) based on a size of information obtained before a designated time.

As an example, as a movement distance of a user of the electronic device 400 increases, a size of the information on the surrounding environment reconstructed in 3-dimentions may also increase. The service module 621 may increase the size of the second buffer 802 for storing the information obtained from the scene understanding module 622-2. When a size of an entire buffer related to the service module 621 is fixed, the service module 621 may decrease the sizes of the first buffer 801 and the third buffer 803 and increase the size of the second buffer 802.

In the above-described embodiment, changing a size of a buffer (e.g., the first buffer 801 to the third buffer 803) may mean changing an address area of memory designated as the buffer. For example, the service module 621 may increase the size of the second buffer 802 by expanding an address area of the memory corresponding to the second buffer 802. The module 621 may reduce the size of the second buffer 802 by reducing the address area of the memory corresponding to the second buffer 802.

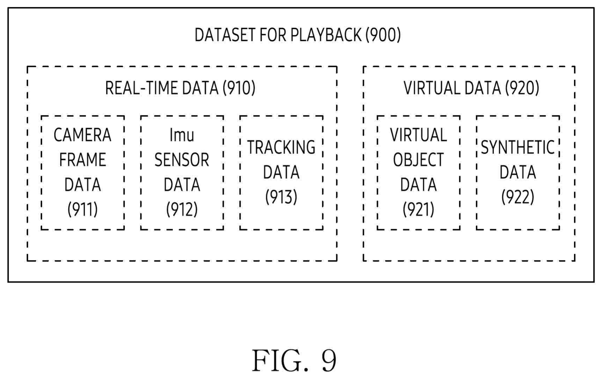

FIG. 9 shows a dataset for playback according to an embodiment.

Referring to FIG. 9, memory 415 of an electronic device 400 may store a dataset 900 for playback. For example, a playback module 624 may store the dataset 900 for playback. For example, the dataset 900 may include real-time data 910 and virtual data 920.

According to an embodiment, the real-time data 910 may include camera frame data 911, IMU sensor data 912, and tracking data 913.

For example, the camera frame data 911 may include data obtained in real time through a camera. As an example, the camera frame data 911 may include at least one of tracking camera data, red, green, blue (RGB) camera data, eye tracking camera data, face tracking camera data, or time of flight (ToF) data.

For example, the IMU sensor data 912 may include data obtained in real time through an IMU sensor.

For example, the tracking data 913 may include data on a user being tracked in real time. As an example, the tracking data 913 may include at least one of data on a 6 degrees of freedom pose, data on a plane, data on a mesh, data on a hand, data on an eye, or data on a face.

According to an embodiment, the virtual data 920 may include virtual object data 921 and synthetic data 922. For example, the virtual object data 921 may include data for display of a virtual object to be displayed in a virtual environment. For example, the synthetic data 922 may include data generated by synthesizing different types of data.

According to an embodiment, the playback module 624 may perform playback based on not only the real-time data 910 but also the virtual data 920. For example, data included in the playback set 900 may be provided according to performance of playback. As an example, the playback module 624 may provide a part of the data included in the playback set 900 to a platform layer 610. As an example, the playback module 624 may provide a part of the data included in the playback set 900 to an application layer (e.g., the application layer 460 of FIG. 4).

According to an embodiment, the playback module 624 may perform playback based on previously stored data (e.g., the virtual data 920) and the real-time data 910. For example, when a head tracking module 622-1 is driven, data (or information) on a 6 degrees of freedom pose stored in the dataset 900 may be provided to the head tracking module 622-1. In addition, while the data (or information) on the 6 degrees of freedom pose stored in the dataset 900 is provided to the head tracking module 622-1, the camera frame data 911 included in the real-time data 910 may be provided to the head tracking module 622-1. Accordingly, the head tracking module 622-1 may obtain gesture information (e.g., information on movement of a head of a user) based on the previously stored data on the 6 degrees of freedom pose and the camera frame data 911 obtained in real time.

According to an embodiment, the playback module 624 may perform playback based on data obtained from an external electronic device provided from an external data management module 625. For example, the playback module 624 may perform playback based on virtual data stored in the external electronic device. As an example, the playback module 624 may perform playback based on a combination of the virtual data stored in the external electronic device and the data stored in the dataset 900.

According to an embodiment, the playback module 624 may identify a difference between the virtual data 920 stored in the dataset 900 and data obtained in real time. The playback module 624 may identify that the difference between the virtual data 920 stored in the dataset 900 and the data obtained in real time is in a threshold range. The playback module 624 may identify an input for the virtual data 920 and an input for the data obtained in real time as the same input based on identifying that the difference between the virtual data 920 stored in the dataset 900 and the data obtained in real time is in the threshold range.

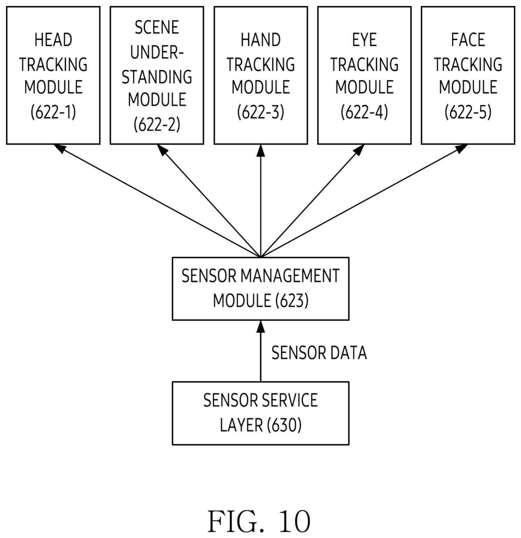

FIG. 10 shows an example of an operation of a sensor management module according to an embodiment.

Referring to FIG. 10, a sensor management module 623 may provide sensor data obtained from a sensor service layer 630 to at least one of a plurality of perception modules. For example, a load balancing module included in the sensor management module 623 may provide the sensor data obtained from the sensor service layer 630 to at least one of the plurality of perception modules.

According to an embodiment, the sensor management module 623 may change a size of data provided to at least one of the plurality of perception modules, based on a state of an electronic device 400.

For example, the sensor management module 623 may change the size of the data provided to at least one of the plurality of perception modules based on at least one of a resource status of the electronic device 400, a state of the plurality of perception modules, or a surrounding environment. As an example, the sensor management module 623 may distribute a load of sensor data provided to the plurality of perception modules. As an example, the sensor management module 623 may filter the sensor data provided to the plurality of perception modules.

For example, it may be a state in which sufficient data for reconstructing a surrounding space of the electronic device 400 in 3-dimensions has been obtained. The sensor management module 623 may identify that sensor data no longer needs to be provided to the scene understanding module 622-2. As an example, the sensor management module 623 may not provide the sensor data to the scene understanding module 622-2 based on the state in which the sufficient data for reconstructing the surrounding space of the electronic device 400 in 3-dimensions has been obtained. As an example, the sensor management module 623 may increase a period for which the sensor data is provided to the scene understanding module 622-2 based on the state in which the sufficient data for reconstructing the surrounding space of the electronic device 400 in 3-dimensions has been obtained. As an example, the sensor management module 623 may change the period for which the sensor data is provided to the scene understanding module 622-2 from a first period to a second period longer than the first period, based on the state in which the sufficient data for reconstructing the surrounding space of the electronic device 400 in 3-dimensions has been obtained.

For example, the sensor management module 623 may identify the state of the electronic device 400. The sensor management module 623 may identify an abnormal state of the electronic device 400. As an example, the sensor management module 623 may identify that resource usage in the electronic device 400 exceeds threshold usage. As an example, the sensor management module 623 may identify that a heat generation amount of the electronic device 400 exceeds a threshold heat generation amount. The sensor management module 623 may increase the period in which the sensor data is obtained, based on identification of the abnormal state of the electronic device 400.

For example, importance of a first perception module among the plurality of perception modules may increase according to a service type. The sensor management module 623 may decrease a load of sensor data provided to remaining perception modules excluding the first perception module. The sensor management module 623 may increase a load of sensor data provided to the first perception module. As an example, while an input for a user interface (UI) displayed in a virtual environment of the electronic device 400 is received through a hand of a user, the sensor management module 623 may increase the load of sensor data provided to a hand tracking module 622-3. The sensor management module 623 may decrease a load of sensor data provided to remaining perception modules excluding the hand tracking module 622-3.

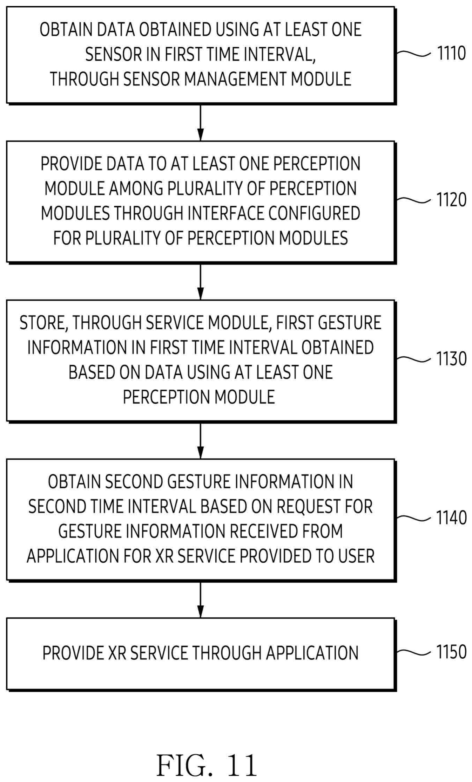

FIG. 11 shows a flowchart of an operation of an electronic device according to an embodiment. In the following embodiment, each of operations may be performed sequentially, but is not necessarily performed sequentially. For example, an order of each of the operations may be changed, and at least two operations may be performed in parallel.

Referring to FIG. 11, in operation 1110, a processor 410 may obtain data obtained using at least one sensor in a first time interval, through a sensor management module 623. For example, the processor 410 may obtain data (e.g., sensor data) obtained through a sensor service layer 630, using the sensor management module 623. For example, the data may be obtained in the first time interval.

According to an embodiment, the processor 410 may obtain other data obtained from an external electronic device in the first time interval using the sensor management module 623. For example, the processor 410 may obtain the other data from the external electronic device through an external data management module 625. The processor 410 may store the obtained other data in a buffer of the external data management module 625. The processor 410 may obtain the other data stored in the buffer of the external data management module 625 using the sensor management module 623.

In operation 1120, the processor 410 may provide the data to at least one perception module among a plurality of perception modules through an interface configured for the plurality of perception modules.

For example, the plurality of perception modules may include at least one of a head tracking (HeT) module 622-1, a scene understanding (SU) module 622-2, a hand tracking (HaT) module 622-3, an eye tracking (ET) module 622-4, and a face tracking (FT) module 622-5. Each of the plurality of perception modules may include a common interface for connection (or link) with the sensor management module 623.

For example, gesture information (e.g., first gesture information or second gesture information) obtained using the plurality of perception modules may include information on a gesture of a user and information on an environment in which the user is located.

According to an embodiment, the processor 410 may drive at least one of the plurality of perception modules according to a request from an application layer and/or a platform layer 610. The processor 410 may provide the data to the at least one perception module among the plurality of perception modules to drive the at least one module among the plurality of perception modules.

In operation 1130, the processor 410 may store, through a service module 621, the first gesture information in the first time interval obtained using the at least one perception module based on the data.

For example, the processor 410 may obtain the first gesture information using the at least one perception module based on the data. Since the data was obtained in the first time interval, the processor 410 may obtain the first gesture information in the first time interval.

According to an embodiment, the processor 410 may store gesture information obtained from each of the plurality of perception modules in a plurality of buffers respectively corresponding to the plurality of perception modules, through the service module 621. For example, the service module 621 may include the plurality of buffers respectively corresponding to the plurality of perception modules. The first gesture information in the first time interval may be stored in at least one buffer respectively corresponding to the at least one perception module.

According to an embodiment, the processor 410 may provide the other data obtained from the external electronic device in the first time interval to the at least one perception module. For example, the processor 410 may provide the data and the other data to the at least one perception module. The processor 410 may obtain the first gesture information based on the data and the other data using the at least one perception module.

In operation 1140, the processor 410 may obtain the second gesture information in a second time interval based on a request for gesture information received from an application for an XR service provided to the user. For example, after the first gesture information is stored, the processor 410 may obtain the second gesture information in the second time interval after the first time interval, based on the request for the gesture information of the user received from the application for the XR service provided to the user.

For example, the processor 410 may identify that gesture information is requested from one of the application layer and/or the platform layer 610. The processor 410 may obtain the second gesture information in the second time interval after the first time interval. For example, the processor 410 may provide data obtained using at least one sensor in the second time interval to at least one perception module among the plurality of perception modules. The processor 410 may obtain the second gesture information in the second time interval based on providing the data to the at least one perception module.

For example, the first gesture information may mean information obtained in the first time interval. The second gesture information may mean information obtained in the second time interval. According to an embodiment, at least one perception module used to obtain the first gesture information may be distinguished from at least one perception module used to obtain the second gesture information. As an example, the first gesture information may be obtained in the first time interval through at least one perception module among the plurality of perception modules. The second gesture information may be obtained in the second time interval through a remaining perception module among the plurality of perception modules.

According to an embodiment, the processor 410 may identify a type of information to be provided to an upper layer (e.g., the application layer and/or the platform layer 610) of the service module 621. For example, the processor 410 may convert the gesture information obtained from each of the plurality of perception modules through the service module 621, based on the identified type of information. For example, a type of information requested from the application layer and/or the platform layer 610 and a type of gesture information obtained from each of the plurality of perception modules may be different. The processor 410 may convert (or change) the gesture information through the service module 621, based on the type of information requested from the application layer and/or the platform layer 610. The processor 410 may provide the information converted through the service module 621 to the application layer and/or the platform layer 610.

In operation 1150, the processor 410 may provide the XR service through the application. For example, the processor 410 may provide the XR service through the application for the XR service, based on the first gesture information and the second gesture information.

According to an embodiment, the processor 410 may receive a request for third gesture information obtained using a first perception module from a second perception module, through the service module 621. For example, the processor 410 may identify the request for the third gesture information from the second perception module through the service module 621. The processor 410 may identify that the third gesture information obtained from the first perception module is in a stored state. The processor 410 may provide the stored third gesture information to the second perception module through the service module 621. As an example, the third gesture information may be in a stored state in a first buffer among the plurality of buffers corresponding to the first perception module. The processor 410 may identify the third gesture information stored in the first buffer among the plurality of buffers corresponding to the first perception module. The processor 410 may provide the third gesture information to the second perception module. The processor 410 may obtain fourth gesture information using the second perception module, based on the third gesture information provided to the second perception module. For example, the processor 410 may obtain the fourth gesture information by providing the third gesture information to the second perception module. The fourth gesture information may be stored in a second buffer corresponding to the second perception module.

According to an embodiment, the processor 410 may change a size of each of the plurality of buffers based on the XR service provided to the user. For example, the processor 410 may identify at least one perception module that is activated (or driven) among the plurality of perception modules. The processor 410 may increase a size of at least one buffer respectively corresponding to at least one perception module. The processor 410 may decrease a size of at least one buffer respectively corresponding to remaining perception module among the plurality of perception modules.

According to an embodiment, the processor 410 may store the second gesture information in at least part of the plurality of buffers based on providing the XR service. For example, the second gesture information may be stored in buffers corresponding to at least one perception module for obtaining the second gesture information. According to an embodiment, the second gesture information may be stored in memory (or buffer) for playback.

For example, the processor 410 may identify reference gesture information based on a type of the XR service. The processor 410 may perform playback based on a comparison between the second gesture information and the reference gesture information. The processor 410 may identify a value for performance of the XR service based on the comparison between the second gesture information and the reference gesture information.

According to an embodiment, the processor 410 may identify a state of the electronic device 400. The processor 410 may change an operation period of each of the plurality of perception modules based on the state of the electronic device 400. According to an embodiment, the processor 410 may change a data obtaining period of at least one sensor based on the state of the electronic device 400.

According to an embodiment, a non-transitory computer readable storage medium may store one or more programs. The one or more programs may include instructions which, when executed by a processor (e.g., the processor 410) of an electronic device (e.g., the electronic device 400) with memory (e.g., the memory 415) and at least one sensor (e.g., the sensor 430), cause the electronic device to obtain, through a sensor management module (e.g., the sensor management module 623), data obtained using the at least one sensor in a first time interval. The one or more programs may include instructions which, when executed by the processor of the electronic device, cause the electronic device to provide, to at least one perception module among a plurality of perception modules, the data through an interface configured for the plurality of perception modules. The one or more programs may include instructions which, when executed by the processor of the electronic device, cause the electronic device to store, through a service module (e.g., a service module 621), first gesture information of a user of the electronic device in the first time interval, obtained using the at least one perception module based on the data. The one or more programs may include instructions which, when executed by the processor of the electronic device, cause the electronic device to obtain, after the first gesture information is stored, second gesture information in a second time interval after the first time interval, based on a request for gesture information of the user received from an application for an extended reality (XR) service provided to the user. The one or more programs may include instructions which, when executed by the processor of the electronic device, cause the electronic device to provide the XR service through the application based on the first gesture information and the second gesture information.

According to an embodiment, the one or more programs may include instructions which, when executed by the processor, cause the electronic device to obtain, through the sensor management module, other data obtained from an external electronic device in the first time interval. The one or more programs may include instructions which, when executed by the processor, cause the electronic device to provide, through the interface, the data and the other data to the at least one perception module. The one or more programs may include instructions which, when executed by the processor, cause the electronic device to obtain, using the at least one perception module, the first gesture information based on the data and the other data.

According to an embodiment, the one or more programs may include instructions which, when executed by the processor, cause the electronic device to store, through the service module, gesture information obtained from each of the plurality of perception modules in a plurality of buffers respectively corresponding to the plurality of perception modules.

According to an embodiment, the plurality of perception modules may include a first perception module and a second perception module. The one or more programs may include instructions which, when executed by the processor, cause the electronic device to receive, through the service module, a request for third gesture information obtained using the first perception module from the second perception module. The one or more programs may include instructions which cause the electronic device to provide, through the service module, the third gesture information stored in a first buffer among the plurality of buffers, the first buffer corresponding to the first perception module, to the second perception module. The one or more programs may include instructions which cause the electronic device to obtain, based on the third gesture information provided to the second perception module, using the second perception module, fourth gesture information.

According to an embodiment, the one or more programs may include instructions which, when executed by the processor, cause the electronic device to change a size of each of the plurality of buffers based on the XR service provided to the user.

According to an embodiment, the one or more programs may include instructions which, when executed by the processor, cause the electronic device to store, based on providing the XR service, the second gesture information in at least part of the plurality of buffers. The one or more programs may include instructions which cause the electronic device to identify reference gesture information based on a type of the XR service. The one or more programs may include instructions which cause the electronic device to identify, based on a comparison between the second gesture information and the reference gesture according to the type of the XR service, a value for performance of the XR service.

According to an embodiment, the first gesture information may be obtained, through the at least one perception module, in the first time interval. The second gesture information may be obtained, through remaining perception module among the plurality of perception modules, in the second time interval.

According to an embodiment, the one or more programs may include instructions which, when executed by the processor, cause the electronic device to identify a type of information for providing to an upper layer of the service module. The one or more programs may include instructions which cause the electronic device to convert, based on the identified type of information, the gesture information obtained, through the service module, from each of the plurality of perception modules.

According to an embodiment, the one or more programs may include instructions which, when executed by the processor, cause the electronic device to identify a state of the electronic device. The one or more programs may include instructions which cause the electronic device to change an operation period of each of the plurality of perception modules, based on the state of the electronic device.

According to an embodiment, the plurality of perception modules may include at least one of a head tracking module, a scene understanding module, a hand tracking module, an eye tracking module, and a face tracking module. The gesture information obtained using the plurality of perception modules may include information on a gesture of the user and information on an environment in which the user is located.

According to an embodiment, a method of an electronic device may comprise obtaining, through a sensor management module, data obtained using at least one sensor in a first time interval. The method may comprise providing, to at least one perception module among a plurality of perception modules, the data through an interface configured for the plurality of perception modules. The method may comprise storing, through a service module, first gesture information of a user of the electronic device in the first time interval, obtained using the at least one perception module based on the data. The method may comprise obtaining, after the first gesture information is stored, second gesture information in a second time interval after the first time interval, based on a request for gesture information of the user received from an application for an extended reality (XR) service provided to the user. The method may comprise providing the XR service through the application based on the first gesture information and the second gesture information.

According to an embodiment, the method may comprise obtaining, through the sensor management module, other data obtained from an external electronic device in the first time interval. The method may comprise providing, through the interface, the data and the other data to the at least one perception module. The method may comprise obtaining, using the at least one perception module, the first gesture information based on the data and the other data.

According to an embodiment, the method may comprise storing, through the service module, gesture information obtained from each of the plurality of perception modules in a plurality of buffers respectively corresponding to the plurality of perception modules.

According to an embodiment, the plurality of perception modules may include a first perception module and a second perception module. The method may comprise receiving, through the service module, a request for third gesture information obtained using the first perception module from the second perception module. The method may comprise providing, through the service module, the third gesture information stored in a first buffer among the plurality of buffers, the first buffer corresponding to the first perception module, to the second perception module. The method may comprise obtaining, based on the third gesture information provided to the second perception module, using the second perception module, fourth gesture information.

According to an embodiment, the method may comprise changing a size of each of the plurality of buffers based on the XR service provided to the user.

According to an embodiment, the method may comprise storing, based on providing the XR service, the second gesture information in at least part of the plurality of buffers. The method may comprise identifying reference gesture information based on a type of the XR service. The method may comprise identifying, based on a comparison between the second gesture information and the reference gesture according to the type of the XR service, a value for performance of the XR service.

According to an embodiment, the first gesture information may be obtained, through the at least one perception module, in the first time interval. The second gesture information may be obtained, through remaining perception module among the plurality of perception modules, in the second time interval.

According to an embodiment, the method may comprise identifying a type of information for providing to an upper layer of the service module. The method may comprise converting, based on the identified type of information, the gesture information obtained, through the service module, from each of the plurality of perception modules.

According to an embodiment, the method may comprise identifying a state of the electronic device. The method may comprise changing an operation period of each of the plurality of perception modules, based on the state of the electronic device.

According to an embodiment, the plurality of perception modules may include at least one of a head tracking module, a scene understanding module, a hand tracking module, an eye tracking module, and a face tracking module. The gesture information obtained using the plurality of perception modules may include information on a gesture of the user and information on an environment in which the user is located.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A non-transitory computer readable storage medium storing one or more programs, wherein the one or more programs include instructions which, when executed by a processor of an electronic device with memory and at least one sensor, cause the electronic device to:
obtain, through a sensor management module, data obtained using the at least one sensor in a first time interval,
provide, to at least one perception module among a plurality of perception modules, the data through an interface configured for the plurality of perception modules,
store, through a service module, first gesture information of a user of the electronic device in the first time interval, obtained using the at least one perception module based on the data,
after the first gesture information is stored, obtain second gesture information in a second time interval after the first time interval, based on a request for gesture information of the user received from an application for an extended reality (XR) service provided to the user, and
provide the XR service through the application based on the first gesture information and the second gesture information.

2. The non-transitory computer readable storage medium of claim 1, wherein the one or more programs further include instructions which, when executed by the processor, cause the electronic device to:
obtain, through the sensor management module, other data obtained from an external electronic device in the first time interval,
provide, through the interface, the data and the other data to the at least one perception module, and
obtain, using the at least one perception module, the first gesture information based on the data and the other data.

3. The non-transitory computer readable storage medium of any one of claims 1 to 2, wherein the one or more programs further include instructions which, when executed by the processor, cause the electronic device to:
store, through the service module, gesture information obtained from each of the plurality of perception modules in a plurality of buffers respectively corresponding to the plurality of perception modules.

4. The non-transitory computer readable storage medium of claim 3, wherein the plurality of perception modules include a first perception module and a second perception module, and
wherein the one or more programs further include instructions which, when executed by the processor, cause the electronic device to:
receive, through the service module, a request for third gesture information obtained using the first perception module from the second perception module,
provide, through the service module, the third gesture information stored in a first buffer among the plurality of buffers, the first buffer corresponding to the first perception module, to the second perception module, and
based on the third gesture information provided to the second perception module, obtain, using the second perception module, fourth gesture information.

5. The non-transitory computer readable storage medium of any one of claims 3 to 4, wherein the one or more programs further include instructions which, when executed by the processor, cause the electronic device to:
change a size of each of the plurality of buffers based on the XR service provided to the user.

6. The non-transitory computer readable storage medium of any one of claims 3 to 5, wherein the one or more programs further include instructions which, when executed by the processor, cause the electronic device to:
based on providing the XR service, store the second gesture information in at least part of the plurality of buffers,
identify reference gesture information based on a type of the XR service, and
based on a comparison between the second gesture information and the reference gesture according to the type of the XR service, identify a value for performance of the XR service.

7. The non-transitory computer readable storage medium of any one of claims 1 to 6, wherein the first gesture information is obtained, through the at least one perception module, in the first time interval, and
wherein the second gesture information is obtained, through remaining perception module among the plurality of perception modules, in the second time interval.

8. The non-transitory computer readable storage medium of any one of claims 1 to 7, wherein the one or more programs further include instructions which, when executed by the processor, cause the electronic device to:
identify a type of information for providing to an upper layer of the service module, and
convert, based on the identified type of information, the gesture information obtained, through the service module, from each of the plurality of perception modules.

9. The non-transitory computer readable storage medium of any one of claims 1 to 8, wherein the one or more programs further include instructions which, when executed by the processor, cause the electronic device to:
identify a state of the electronic device, and
change an operation period of each of the plurality of perception modules, based on the state of the electronic device.

10. The non-transitory computer readable storage medium of any one of claims 1 to 9, wherein the plurality of perception modules include at least one of a head tracking module (622-1), a scene understanding module (622-2), a hand tracking module (622-3), an eye tracking module (622-4), and a face tracking module (622-5), and
wherein the gesture information obtained using the plurality of perception modules includes information on a gesture of the user and information on an environment in which the user is located.

11. A method of an electronic device, comprising:
obtaining, through a sensor management module, data obtained using at least one sensor in a first time interval,
providing, to at least one perception module among a plurality of perception modules, the data through an interface configured for the plurality of perception modules,
storing, through a service module, first gesture information of a user of the electronic device in the first time interval, obtained using the at least one perception module based on the data,
after the first gesture information is stored, obtaining second gesture information in a second time interval after the first time interval, based on a request for gesture information of the user received from an application for an extended reality (XR) service provided to the user, and
providing the XR service through the application based on the first gesture information and the second gesture information.

12. The method of claim 11, wherein the method further comprises:
obtaining, through the sensor management module, other data obtained from an external electronic device in the first time interval,
providing, through the interface, the data and the other data to the at least one perception module, and
obtaining, using the at least one perception module, the first gesture information based on the data and the other data.

13. The method of any one of claims 11 to 12, wherein the method further comprises:
storing, through the service module, gesture information obtained from each of the plurality of perception modules in a plurality of buffers respectively corresponding to the plurality of perception modules.

14. The method of claim 13, wherein the plurality of perception modules include a first perception module and a second perception module, and
wherein the method further comprises:
receiving, through the service module, a request for third gesture information obtained using the first perception module from the second perception module,
providing, through the service module, the third gesture information stored in a first buffer among the plurality of buffers, the first buffer corresponding to the first perception module, to the second perception module, and
based on the third gesture information provided to the second perception module, obtaining, using the second perception module, fourth gesture information.

15. The method of any one of claims 13 to 14, wherein the method further comprises:
changing a size of each of the plurality of buffers based on the XR service provided to the user.
